# EUROPEAN PATENT APPLICATION

(11) **EP 0 861 004 A1**
(43) Date of publication of application: **26.08.1998**
(21) Application number: 96932815.2
(22) Date of filing: 03.10.1996
(51) Int. Cl.: H04N 7/32

(54) **METHOD AND DEVICE FOR ENCODING/DECODING A DIGITAL IMAGE**

(30) Priority: 04.10.1995 JP 257390/95
(71) Applicant: MATSUSHITA ELECTRIC INDUSTRIAL CO., LTD., Kadoma-shi, Osaka-fu, 571 (JP)
(72) Inventor: BOON, Choong, Seng, Osaka 570 (JP)
(74) Representative: Kügele, Bernhard
(86) International application number: JP9602888
(87) International publication number: WO9713373

(57) **Abstract**

A method of encoding & decoding a digital picture, an apparatus using the same method, and a storage media using the same are provided. The method can encode efficiently each of divided regions having an arbitrary shape, and at the same time, reproduce a region selectively. The digital picture encoding apparatus comprises an input terminal, region division means, region overlaying order determination means, and encoding means. The region division means divides the picture into plural regions having an arbitrary shape, and produces a division map. The region overlaying order determination means receives the division map, and determines the overlaying order of each region according to a predetermined method. Then, the encoding means encodes a luminance signal, a color difference signal and a shape signal of each region according to the overlaying order. Before encoding an objective region, an adjacent part of the shape of the objective region to the upper priority region is changed so that an amount of coded data is minimized.

## Description

### Field of the Engineering

The present invention relates to a method of encoding and decoding a digital picture, and an apparatus thereof. The method and the apparatus are used to encode the digital picture for compression in order to transmit or store the digital picture. More particularly, the present invention relates to the encoding/decoding method when the picture is divided into a plurality of regions, and the apparatus using the same method.

### Background Art

In order to transmit or store a digital picture with a high efficiency, it is necessary to encode an original picture for compressing. Various methods and apparatuses of picture encoding for compression have been developed and commercialized extensively in the market, such as a method using discrete cosine transform (DCT), a method using a sub-band transform, and apparatuses employing these methods. Picture encoding compression methods according to ISO Standard, such as H.261, MPEG 1 and MPEG 2, are adopted in video telephones, video-conference, storage media of CD-ROM, and broadcasting systems.

The above encoding compression methods handle each picture as one frame, and process the entire one frame as a unit. Recently, another method is employed in order to improve a coding efficiency, i.e. a method of dividing a picture into plural regions depending on the content of the picture, and encoding each region. This picture encoding method which employs a region-partitioning-system is laid open as unexamined Japanese patent application publications, No. H02-279080 and H07-038896. When a picture is divided into plural regions, a shape in addition to a luminance signal and a color difference signal in a region must be encoded. A chain coding method is well known as one of the shape coding methods.

### Disclosure of the Invention

In dividing a picture into plural regions, the adjacent regions have the same shape of borders with each other, accordingly, if a shape of each region is encoded independently, the encoded data would be extra large volume. In order to reduce the amount of the encoded data, the following procedures are available: (1) Find a difference of shapes between two adjacent regions, and (2) assume that a shape of a common border between the adjacent regions belongs to one region, and not to both regions. A correlation table which indicates the relation between the two adjacent regions is encoded at the same time so as to identify the neighboring regions.

On the other hand, when a specified region is requested to reproduce selectively, a shape in the adjacent region to the specified region must be reproduced, otherwise the shape of the specified region cannot be reproduce, for the shape-difference is encoded as mentioned above.

In order to address the above problem, the present invention provides the following coding method: first, divide an inputted picture into plural regions having an arbitrary shape, then allot each region a layering number specified in the overlaying order, and finally, a compression encoding method is applied to a luminance signal, color difference signal, and shape signal in each region according to this overlaying order, where the overlaying order indicates relative order among the layers which are supposed to pile up following this order for completing the picture. Preferably, the region allotted with the highest order is encoded first, and other region follows the downward order, or the region allotted with the lowest order first, and then others follow in the upward order.

Before encoding a shape of an objective region, an adjacent part of the shape to its upper region must be modified. Preferably, the adjacent part of the shape is modified so that an amount of encoded data is minimized.

How to determine the overlaying order is as follows: first, find the center of gravity of each region, then allot the overlaying order to each region depending on a distance from the picture center. Preferably, the region having the center of gravity nearest to the picture center is allotted with the highest order.

The above method is embodied with a digital picture encoder which comprises, (a) an input terminal, (b) region division means, (c) region overlaying order determination means, and (d) encoding means. The embodiment is detailed as follows:
(1) divide a picture into plural regions having an arbitrary shape by the region division means, thereby producing a division map,
(2) input the division map into the regional overlaying order determination means,
(3) allot each region a layering number specified in the overlaying order based on a predetermined method,
(4)encode a luminance signal, color difference signal, and shape signal in each region following the overlaying order of layers.

Before encoding the shape of an objective region, the adjacent part of the shape to its upper region must be changed so that an amount of the encoded data is minimized.

Further, in the method of encoding an inputted picture, where the inputted picture is divided into plural regions, which are allotted with plural layers together with an overlaying order, and each region is encoded according to the overlaying order, a region identifier is added to a coded data of each region. Preferably, successive numbers are allotted to the region identifiers.

The picture data encoded by the above method (without the region identifier) can be decoded by the following decoder and the method using the same: the decoder which decodes and reproduces a picture data comprises, (a) an outer input terminal, (b) decoding means, (c) overlaying means, and (d) a frame memory. An operation of decoding the picture data is as follows: (1) the decoding means decodes the picture data in a reconstructed region according to the overlaying order, (2)reproduction picture and an overlaid image supplied from the frame memory are fed into the overlaying means, (3) the reproduction picture is overlaid on the overlaid image to produce a new overlaid image, (4) the frame memory stores the new overlaid image. Preferably, after overlaying every region one after another which constitutes one frame, the overlaid image stored in the frame memory is outputted, and then the frame memory is set at "0" (zero).

The picture data encoded by the above method including the region identifier can be decoded by the following decoder and the method using the same: the decoder which decodes and reproduces a picture data comprises, (a) an outer input terminal, (b) identifier selection means, (c) control means, (d) a switch, (e) decoding means (f) overlaying means, and (g) a frame memory. The operation of decoding the picture data is as follows: (1) a region identifier is selected by identifier selectior, (2) an outside input signal and the region identifier are inputted in the control means, (3) a control signal for controlling the switch is produced, (4) the switch is controlled by the controlling signal, and when the switch is closed, the picture data is fed into the decoding means, (5) the decoding means decodes the picture data in a reconstructed region according to the overlaying order, (6) the overlaying means receives a reconstructed picture and the overlaid picture supplied from the frame memory is fed into the overlaying means, (7) the reconstructed picture is overlaid onto the overlaid picture to produce a new overlaid picture, then (8) the frame memory stores the new overlaid picture.

Another decoder using the above method using the region identifier is available as follows: the decoder comprises, (a) an outer input terminal, (b) identifier selector, (c) skipped region detection means, (d) decoding means, (e) overlaying means, and (f) a frame memory. The operation of decoding the picture data is as follows: (1) the region identifier is selected by the identifier selector, (2) a skipped region is detected with the region identifier by the skipped region detection means, (3) a detection control signal is outputted, (4) the picture data and the detection control signal are fed into the decoding means, (5-1) when a skipped region is detected, a previously reconstructed region is reproduced which has the same region identifier as that of the skipped region just detected, (5-2) when a skipped region is not detected, the picture data is decoded in the reconstructed region and outputted, then the reconstructed picture and the overlaid picture supplied from the frame memory are fed into the overlaying means, and finally the overlaid picture is overlaid on the reconstructed picture to produce an new overlaid image. The new overlaid image is stored into the frame memory. Preferably, the skipped region detection means comprises a register and a subtractor, where register stores the region identifier of the region just processed before the region presently inputted, and the subtractor finds a difference between an inputted region identifier and the region identifier stored in the register. When the difference is greater than a threshold value, it is assumed that a skipped regions exists.

The present invention also relates to a storage media which stores a digital picture data encoded by the method including the steps of: (1) dividing a picture data into plural regions having an arbitrary shape, (2) allotting each of the plural regions a layering order specifying the overlaying order, (3) encoding each of the above region according to the overlaying order.

According to the present invention, each one of the plural regions having an arbitrary picture is treated as different layers , and an overlaying order is allotted to each layer. The layers are encoded according to the overlaying order, whereby information indicating a relation between the regions need not to be encoded. Since the difference between the commonly-shared-border-shape is not processed by differential encoding , the specified region can be independently reproduced. Since a shape of an objective region adjacent to an upper region in the overlaying order is changed so that an amount of coded data amount of coded data is minimized before the region is encoded, the amount of coded data of the shape can be reduced. Further, the region identifier is added, whereby a region can be reproduced selectively, and a skipped region can be detected with ease.

### Brief Description of the Drawings

Fig. 1 is a flow chart depicting a method of encoding a digital picture according to the present invention.

Fig. 2 depicts an example of a division map of a picture which is divided into plural regions having an arbitrary shape.

Fig. 3 is a flow chart depicting a method of finding a center of gravity of a region.

Fig. 4 is a block diagram of a digital picture encoder according to the present invention.

Fig. 5 is a block diagram depicting an embodiment of coding means used in the encoder of the digital picture according to the present invention.

Fig. 6 is a block diagram depicting an embodiment of a region selector used in the digital picture encoder according to the present invention.

Fig. 7 is a chart depicting a data structure used in a method of coding the digital picture according to the present invention.

Fig. 8 is a block diagram of a decoding apparatus of the digital picture according to the present invention.

Fig. 9 is a block diagram of decoding means used in the decoding apparatus of the digital picture according to the present invention.

Fig. 10 is a block diagram depicting a second decoding apparatus of the digital picture,

Fig. 11 is a block diagram depicting a third decoding apparatus of the digital picture.

### Detailed Description of the Preferred Embodiments

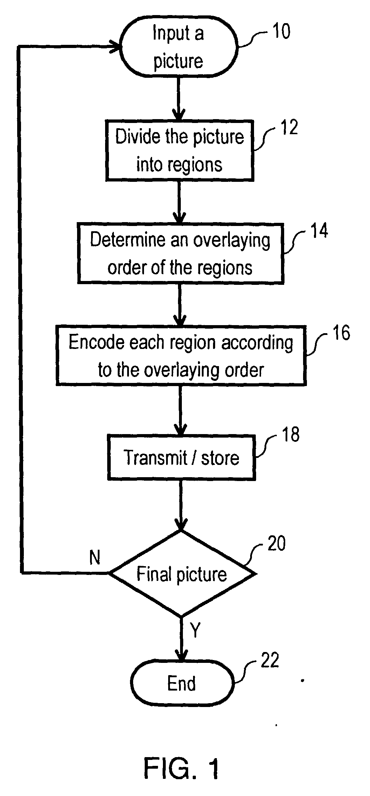

Fig. 1 is a flow chart depicting a method of encoding a digital picture of the present invention. First, input a picture (10.) Divide the picture into regions (12.) There are various methods of dividing a picture; a picture is divided into regions by using a moving information signal of the picture, or the picture is divided into regions responsive to textures. A preferable method is to divide the picture in a unit of an object in the picture. Methods of regional division are described in the following literature: N. Diehl, "Object-oriented motion estimation and segmentation in image sequences", Signal Processing: Image Communication 1991, pp.23-26, Nilhil R. Pal et al, "A review on image segmentation techniques", Pattern Recognition, Vol. 26, No.9, 1993, pp. 1277-1294.

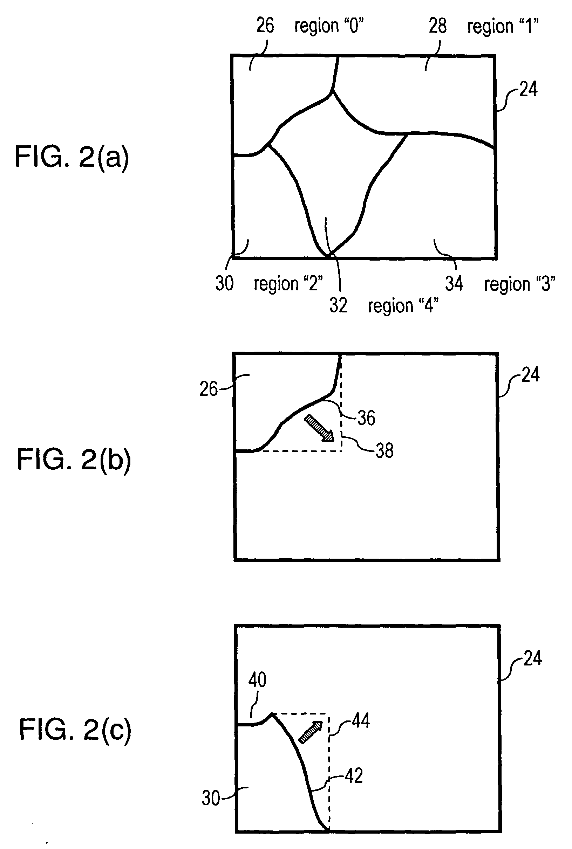

The picture is divided into regions, whereby a division map is produced. Fig. 2(a) is an example of the division map of the picture which is divided into plural regions having an arbitrary shape. In Fig. 2(a), the picture is divided into five regions. It is preferable to add the same number to each sample (corresponding to a pixel of a luminance signal) as that of the region to which the sample belongs. Each region is allotted with a layer by using this division map, and an overlaying order is defined for the layers (Fig. 1 step 14.) In Fig. 2(a), for example, a region 4 (32) is assigned the upper most layer, a region 3 (34) is the next, then, region 2 (30), region 1 (28) and region 0 (26) are assigned in this order, i.e. the region 0 (26) is assigned the lowest layer. An embodiment of this determining the overlaying order is detailed later. A luminance signal, color difference signal, and shape signal are encoded following the overlaying order (Fig. 1, step 16.) For instance, the lowest region 0 (26) may be firstly processed, then the region 1 (28), and onward until the region 4 (32) are processed sequentially. Another way is, on the contrary, the highest region 4 (32) may be firstly processed, and onward until the region 0 (26) is lastly processed. The data undergone the encoding is transmitted or recorded following the processing order (Fig. 1, step 18.) The above process is repeated until a series of pictures are processed.

The luminance signal and color difference signal are encoded by DCT (discrete cosine transform), or sub-band transform method. The shape signal is encoded by a chain coding method, or quadtree method. A shape adjacent to the upper region is modified before encoding an objective region. Preferably, the shape is changed so that the amount of coded dataamount of coded data is minimized.

Fig. 2(b) and Fig. 2(c) are examples of changing the shape. In Fig. 2(b), a curve 36 shows the shape of the region 0 (26). In this embodiment, the region 0 is assumed the lowest region as described above. Since the region 0 is the lowest, the region 1 (28), region 2 (30), region 4 (32) stay upper than the region 0. Accordingly, the curve 36 of the region 0 (26) is changed, e.g. to a broken line 38 in Fig. 2 (b), then an encoding is started. When using the chain coding method, a straight line produces less amount of coded data than a curve produces, for the straight line does not have so many direction changes. The shape of curve 36 is encoded at the same time when the upper region than the region 0 is encoded. Fig. 2(c) shows a shape of the region 2 (30) by curves 40 and 42. The curve 40 is adjacent to the region 0 (26), however; since the region 2(30) is assigned upper than the region 0 (26), the curve 40 is directly encoded as it is. On the other hand, the curve 42 is adjacent to the region 4 (32), however; since the region 4 (32) is upper than the region 2 (30), the curve 42 is changed into a broken line 44 before being encoded. The broken line 44 is a straight line, and it can reduce an amount of coded data. The shape is changed by a shape encoding method, and it is not necessary to change a shape to a straight line, the shape may be changed to a step-like curve. The point is that amount of coded data produced by the changed shape should be minimized.

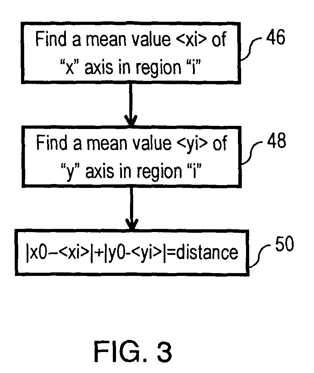

Next, an example of how to determine the overlaying order is described hereinafter. In general, an important object is placed at the center of a picture. Accordingly, a center of gravity of each region is found, and the overlaying order is allotted to each region depending on a distance from the center of the picture. Preferably, the overlaying order is allotted so that the first priority is allotted to a region of which center of gravity is nearest to the center of the picture. A method of finding the center of gravity is depicted in Fig. 3: First, find a mean value "xi" of a horizontal coordinate axis, second, find a mean value "yi" of a vertical coordinate axis, where both axes belong to a region "i" (steps 46 and 48.) Next, assume that the coordinates of the picture center are x0, y0, then a distance from the picture center is found by an absolute value of the difference from the center coordinates (step 50.) A square instead of the absolute value may be used. Finally, sort the distances found by the above procedure in order of length, then the overlaying order is determined. The same overlaying order may be applied to a different region.

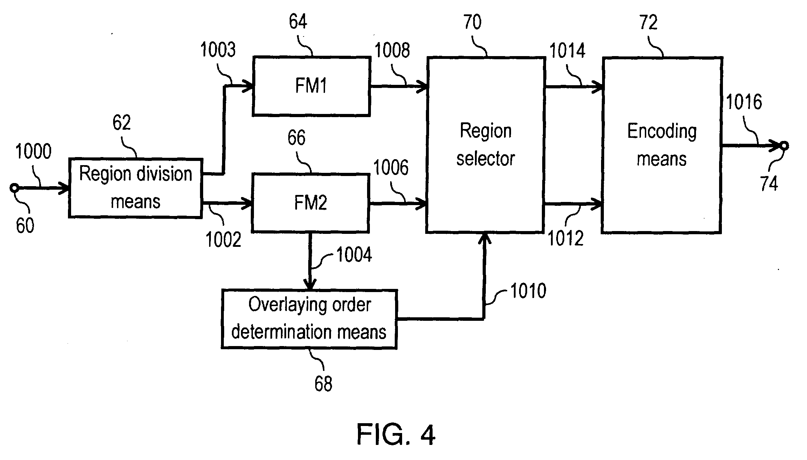

Fig. 4 is a block diagram depicting an embodiment of an encoder according to the present invention. The apparatus comprises:
(a) an input terminal 60,
(b) region division means 62,
(c) a first frame memory 64,
(d) a second frame memory 66,
(e) overlaying order determination means 68,
(f) region selector 70,
(g) encoding means 72, and
(h) an output terminal 74.

A digital picture is fed into the input terminal 60. The picture is divided into plural regions, each having an arbitrary shape by the region division means 62, and a division map is outputted. Appropriate region division means is selected, such as a division method using moving information of the picture, or a method of dividing the picture responding to a characteristic of each pixel constituting the picture. Preferably, the picture is divided in the unit of an object. An example of the division map is shown in Fig. 2. It is preferable to assign a number which is the same as the layering number of the region to each sample (corresponding to a pixel of a luminance signal). The division map produced by the region division means is transmitted to the second frame memory 66 via a line 1002. A luminance signal and a color difference signal are stored in the first frame memory 64 via a line 1003.

The division map stored in the second frame memory is transmitted to the overlaying order determination means 68, and the overlaying order of the regions are determined. One example of the method how to determine the overlaying order was already described. The region numbers are transmitted from the sequence determination means 68 to the region selector 70 via a line 1010 according to the overlaying order. The region selector 70 transmits a luminance signal, a color difference signal, and a shape signal of the regions transmitted therein to the encoding means 72. An embodiment of the region selector 70 is detailed later. There may be plural encoding means 72, and each region can be encoded in parallel.

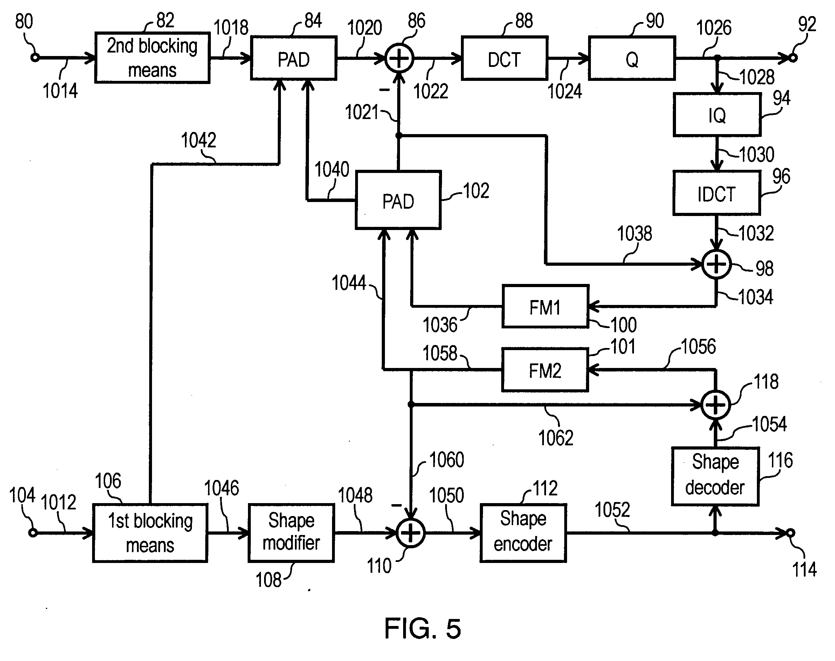

Fig. 5 is a block diagram depicting the embodiment of the encoding means 72 used in the digital picture encoder of the present invention. First, the shape signal transmitted from the region selector 70 is fed into a terminal 104 and runs through a line 1012 to reach to first blocking means 106, where the shape signal is resolved into blocks. Second, the shape signal resolved to blocks is changed by the shape modifier 108 as explained in the above description. Only an adjacent part of the shape to the upper region of the objective region is changed, and other part of the shape is not changed. Then, in an adder 110, a difference is found between an output from the shape converter 108 and an prediction signal tapped off from the second frame memory 101. The difference signal is fed into the shape coding means 112 via a line 1050 and is encoded by a predetermined method. Next, a data of the coded shape is transmitted to a shape decoding means 116 to be decoded. In an adder 118, the decoded shape signal is added to the prediction signal transmitted through a line 1062, whereby the shape is reproduced. Finally, the reproduced signal is stored in the second frame memory 101.

The luminance signal and color difference signal transmitted from the region selector 70 are fed into a terminal 80 and run through a line 1014 to reach to a second blocking means 82, where the signals are resolved into blocks. Within each blocks of the luminance and color difference signals, the sample outside the active region( target region under processing), as indicated by the shape information via line 1042, are replaced by a padding value. The padding value is represented by a value transmitted from a second pixel padder 102. Into the second pixel padder 102, a shape prediction signal transmitted via a line 1044 and the prediction signals of the luminance and color difference signals via a line 1036 are inputted. The shape-modified-portion is detected by the prediction signal of the shape, and a pixel value of the shape-modified-portion is padded with a mean pixel value of the region. The same mean pixel value is transmitted to the first pixel padder 84 via a line 1040. The signals which are padded with the padding value are sent to an adder 86 via a line 1020 and a line 1021 to find a difference, which can be reduced by the padding. This difference signal is trnsformed by the DCT (discrete cosine transform) converter 88, and quantized by a quantizer 90. The quantized data is outputted via an output terminal 92, and at the same time, the difference signal is inversely quantized by an inverse quantizer 94, and also inversely changed by an inverse DCT converter 96. Then an prediction signal sent via a line 1038 is added to the output from the converter 96 in an adder 98. The adding result is stored in the first frame memory 100. The data at the output terminals 92 and 114 are sent to a variable length coding
encoder (not shown) and then converted into variable length coded data.

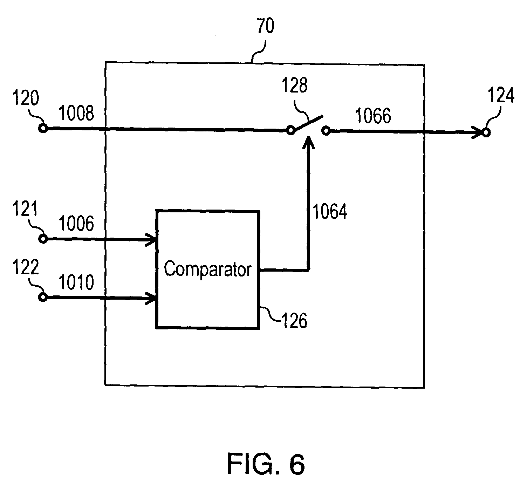

Fig. 6 is a block diagram depicting an embodiment of the region selector 70 used in the digital picture encoder of the present invention. The luminance and color difference signals are fed via a terminal 120, a line 1008 to the region selector 70. The shape signal is fed via a terminal 121, a line 1006 to the region selector 70. A region number is fed via a terminal 122, a line 1010 to the region selector 70. A comparator 126 compares each sample of the shape signal with the region number, and when the two agree, a switch 128 is closed to a line 1066 to output the pixels of the corresponding luminance and color difference signals. As such, when the region numbers are inputted according to the overlaying order, the pixels of each region are outputted accordingly.

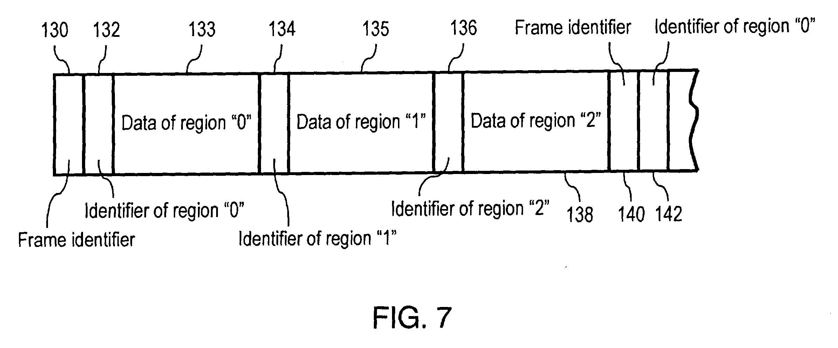

Fig. 7 is a chart depicting a data structure according to the digital picture encoder of the present invention. This chart shows that the region identifier is added to a coded data of each region, when the input picture which is outputted to the terminal 74 in Fig. 4 is divided into plural regions each having an arbitrary shape, each of the plural regions is allotted with a layering order defined by a overlaying order, each region is encoded according to the overlaying order before being transmitted or stored. In Fig. 7, first, a frame identifier 130 is placed, whereby a staring point of a frame is identified. Next, a region identifier 132 is added, whereby a starting point of a region is identified. These identifiers are represented with, for instance, a unique code having a fixed length (5bits.) Then, a coded data 133 (signals of luminance, color difference, and shape) of the region is added to the region identifier. Another region identifier 134 is added to. When all the data of the regions constituting one frame are added, then another frame identifier 140 is placed, and the same procedure is repeated to produce, transmit, and store the coded data until the last frame of the picture is processed. Preferably, an easy identifying number is allotted to the region identifier, e.g. in the case of Region 0; its identifier is allotted with 10, Region 1; its identifier is allotted with 11, Region 2; its identifier 12. Consecutive numbers with an uniform interval may be allotted, e.g. even numbers or odd numbers can be used.

Regarding an order of overlaying regions one on top of another, the encoder and decoder are set so that encoding and decoding can be performed according to a predetermined order, however; when order information is inserted after the frame identifier 130, an arbitrary order can be established every time.

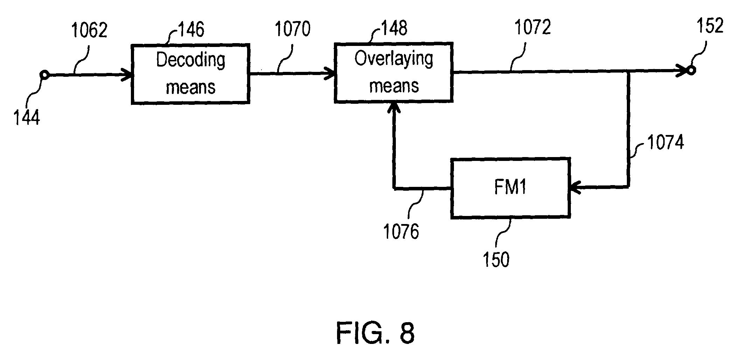

Fig. 8 is a block diagram of a digital picture decoder according to the present invention. The decoder decodes and reproduces an original picture which was divided into plural regions having an arbitrary shape, and each region was allotted with plural layers together with an overlaying order, and each region was encoded according to the overlaying order. The decoder shown in Fig. 8 comprises the following elements:
(a) an outer input terminal 144,
(b) decoding means 146,
(c) overlaying means 148,
(d) a frame memory 150.

The coded picture data shown in Fig. 7 is fed into the decoder via an input terminal 144. The decoding means decodes the picture data according to the overlaying order, thereby forming a reconstructed region of each layer. The picture is reconstructed in the reconstructed region. Since the data is transmitted according to the overlaying order, the data inputted to the decoder can be simply decoded. The reproduced picture is sent to the overlaying means 148 via a line 1070, and an overlaid picture supplied from the frame memory 150 is fed into the overlaying means 148 via a line 1076. The reproduction picture is overlaid onto the overlaid picture in the overlaying means 148 to produce a new overlaid picture, which is then stored in the frame memory 150. Preferably, after overlaying all the regions constituting one frame, the overlaid picture stored in the frame memory 150 is outputted, and then the frame memory 150 is set to 0 (zero.) In the case of Fig. 2(a), the region 0 (26) is firstly reproduced, and then the region 1 (28), the region 2 (30) are overlaid sequentially. Since the changed shape is overwritten through the overlaying, the shape of each region can be reproduced. Plural decoding means 146 might decode the picture data of the plural regions in parallel.

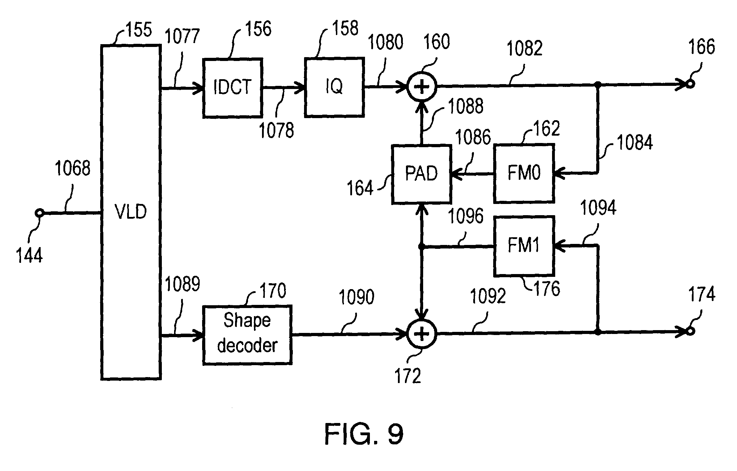

Fig. 9 is a block diagram depicting an embodiment of the decoding means used in the digital picture decoder according to the present invention. The coded picture data is fed into a variable length decoder 155 via a line 1068, and decoded. The shape signal is fed into a shape decoder 170 via a line 1089, and decoded. Because the decoded shape signal is a difference signal, the decoded shape signal is added to an predictedpredicted signal sent from a frame memory 176 in an adder 172. The shape signal thus reproduced is outputted to a terminal 174, and at the same time, stored in the frame memory 176.

The luminance signal and color difference signal are sent to an inverse DCT converter 156 via a line 1077, and inversely quantized by an inverse quantizer 158, then added to an prediction signal in an adder 160. The prediction signal is transmitted from the frame memory 162. The samples of the prediction signals which stays outside the active region, as indicated by the shape signal is replaced with a padding value at a padder 164. The padding value is a mean value of the samples inside the active region. The reproduced luminance and color difference signals are outputted to a terminal 166, and at the same time, stored in the frame memory 162.

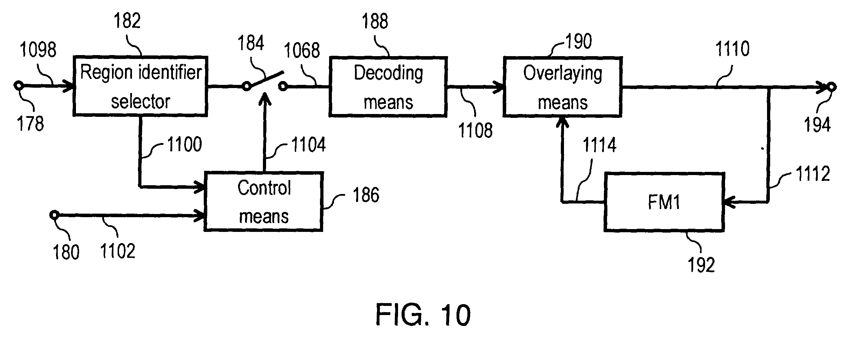

Fig. 10 is a block diagram of a second digital picture decoder according to the present invention. The decoder decodes and reproduces an original picture which was divided into plural regions having an arbitrary shape, and the plural region were allotted with an overlaying order, and each region was encoded according to the overlaying order, a region identifier was added to a coded data of each region. The decoder shown in Fig. 10 comprises the following elements:
(a) an outer input terminal 178,
(b) region identifier selector 182,
(c) control means 186,
(d) a switch 184,
(e) decoding means 188,
(f) overlaying means 190,
(g) a frame memory 192.

The region identifier selector 182 selects a region identifier from a coded data inputted from the terminal 178 via a line 1098. The control means 186 receives an outer input signal via a line 1102 as well as the region identifier via a line 1100, and produces a control signal for controlling the switch 184. A remote control or a keyboard is used as a source of the outer input signal. The switch 184 is controlled by the control signal, and when the switch 184 is closed, the picture data is fed into decoding means 188, which decodes the picture data according to the overlaying order, thereby forming a reconstructed region in each layer, and a picture is reconstructed in the region.
The reproduced picture is sent to the overlaying means 190, and an overlaid picture supplied from the frame memory 192 is fed into the overlaying means 190. The reproduction picture is overlaid onto the overlaid picture to produce a new overlaid picture, which is then stored in the frame memory 192. There are at least two control methods for the switch 184. When an input signal transmitted via the line 1102 agrees with the region identifier via the line 1100, the switch 184 is closed; in this case, only a designated region is reconstructed. On the contrary, when the input signal via the line 1102 agrees with the region identifier, the switch 184 is opened; in this case, the designated region only is not reconstructed. As such, a region can be selectively decoded and reconstructed.

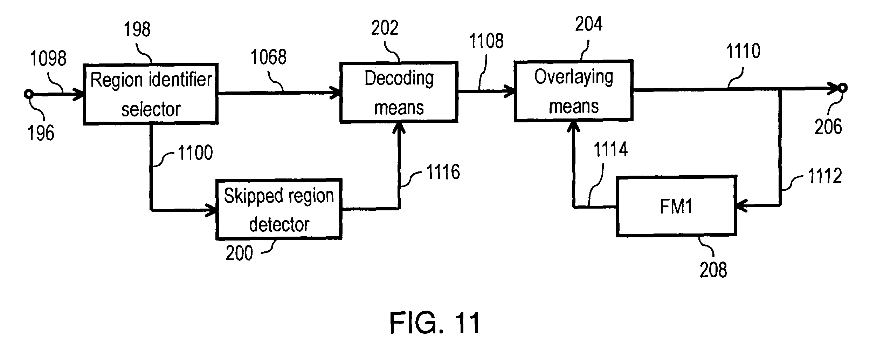

Fig. 11 is a block diagram of a third digital picture decoder of the present invention. The third decoder decodes and reproduces an original picture which was divided into plural regions having an arbitrary shape, wherein each region being allotted with an overlaying order is decoded according to the overlaying order, and a region identifier is added to a coded data of each region. The third decoder comprises the following elements:
(a) an outer input terminal 196,
(b) region identifier selector 198,
(c) skipped region detector 200,
(d) decoding means 202,
(e) overlaying means 204,
(f) a frame memory 208.

The identifier selector 198 selects a region identifier from a coded data inputted. The selected region identifier is sent via a line 1100 to the skipped region detector 200, where a skipped region is detected by using the region identifier, and a detection control signal is produced. The decoding means receives the detection control signal and a picture data, and outputs a past reconstructed region having the same region identifier that of the skipped region (the previously reconstructed region has been stored in the frame memory incorporated in the decoding means), when a skipped region is detected. The decoding means 202 decodes the inputted picture data according to the overlaying order, thereby forming a reconstructed region in each layer, and then reproduces the original picture in the reconstructed region. The reproduced picture is sent to the overlaying means 204, and an overlaid picture supplied from the frame memory 208 is fed into the overlaying means 204. The reproduction picture is overlaid onto the overlaid picture to produce a new overlaid picture, which is then stored in the frame memory 208. Preferably the skipped region detector 200 comprises: (c-1) a register, (c-2) a subtracter. The subtracter stores the region identifier of the preceding region of the now-processed region, and the subtracter finds a difference between the region identifier inputted from the identifier selector 198 and the region identifier stored in the register. When the difference is greater than a specified threshold, it is determined that a skipped region exists. When the region identifiers are denoted with consecutive integers at an interval of one, the specified threshold is 1 (one.) For instance, assume that the past region identifier stored in the register is: prev_id, the present region identifier is: current_id, and current_id - prev_id > 1, then the skipped region can be detected by this equation: prev_id + 1, prerv_id + 2, .........., prev_id + (current_id - prev_id) - 1 = current_id - 1

The digital picture signal encoded by the above methods can be stored in various types of storage media, such as CD-ROM, DVD, FD, etc., and decoded as well as reproduced by the decoding methods described above.

### Industrial Applicability

In a video conference, video telephone, storage media including a CD-ROM, broadcasting system, etc., the present invention realizes a method of compressing, encoding, decoding a picture, an apparatus using the same, and a storage media using the same. The method can reduce a data quantity to be transmitted or stored, and reproduce selectively one of the objects constituting a picture.

## Claims

1. A method of encoding a digital picture data comprising the steps of :
(a) dividing a picture data into a plurality of regions having an arbitrary shape,
(b) allotting said plurality of regions a plurality of layers specifying an overlaying order,
(c) encoding each of said regions according to the overlaying order,
wherein an adjacent part of a shape of an objective region to an upper region is modified before encoding the objective region.

2. The method of encoding a digital picture data as defined in claim 1, wherein a luminance signal, a color difference signal, and a shape signal are compressed and encoded according to the defined overlying order.

3. The method of encoding a digital picture data as defined in claim 1, wherein the shape of said objective region is encoded after the adjacent part of the shape of said objective region to the upper region is modified so that an amount of encoded data is minimized.

4. The method of encoding a digital picture data as defined in claim 1, 2 or 3, wherein the overlaying order is allotted to the layers depending on a distance from a center of said picture to a center of gravity of each region.

5. The method of encoding a digital picture data as defined in claim 4, wherein the overlying order is allotted to the layers so that a region having a nearest distance between the center of gravity thereof and the center of said picture is an upper most region.

6. A digital picture encoding apparatus comprising :
(a) an input terminal,
(b) region division means,
(c) region overlaying order determination means, and
(d) encoding means,
wherein,
said input terminal receives a picture,
said region division means divides the picture into a plurality of regions having an arbitrary shape, and outputs a division map,
said region overlaying order determination means receives said division map, and allots a plurality of layers to said plurality of regions specifying an overlaying order,
said encoding means encodes a luminance signal, a color difference signal, and a shape signal of said regions according to said overlaying order after changing an adjacent part of a shape of an objective region to an upper region.

7. A digital picture encoding apparatus comprising :
(a) an input terminal,
(b) region division means,
(c) region overlaying order determination means,
(d) a region selector, and
(e) encoding means,
wherein,
said input terminal receives a picture,
said region division means divides the picture into a plurality of regions having an arbitrary shape, and outputs a division map,
said region overlaying order determination means receives said division map, and allots a plurality of layers to said plurality of regions specifying an overlaying order,
said regions selector receives said picture and said division map, and outputs a luminance signal, color difference signal and a shape signal of a corresponding region according to the overlaying order,
said encoding means receives and encodes the luminance signal, color difference signal, and shape signal outputted from said region selector.

8. The digital picture encoding apparatus as defined in claim 6, or claim 7, wherein a shape of an objective region is encoded after an adjacent part of the shape of said objective region to an upper priority region is modified so that an amount of encoded data is minimized.

9. In the method of encoding digital picture comprising the steps of :
(a) dividing a picture data into a plurality of regions having an arbitrary shape,
(b) allotting said plurality of regions a plurality of layers specifying an overlaying order, and
(c) encoding each of said regions according to the overlaying order,
wherein,
an objective region is encoded after an adjacent part of the objective region to an upper region is modified, and a region identifier is added to a coded data of each of said regions.

10. The method of encoding a digital picture as defined in claim 9, wherein said region identifier is denoted with a serial number according to the overlaying order.

11. A digital picture decoding apparatus which decodes a picture data encoded through the steps of :
(a) dividing a picture data into a plurality of regions having an arbitrary shape,
(b) allotting said plurality of regions a plurality of layers specifying an overlaying order,
(c) encoding each of said regions according to the overlaying order, said decoder comprising :
(1) an outer input terminal.
(2) decoding means,
(3) overlaying means, and
(4) a frame memory,
wherein,
said outer input terminal receives said picture data encoded,
said decoding means decodes said picture data according to the overlaying order, thereby forming a reconstructed region,
said overlaying means receives a reproduced picture and an overlaid picture supplied from said frame memory, and overlays both the pictures to produce a new overlaid picture, and
said frame memory stores said new overlaid picture.

12. The digital picture decoding apparatus as defines in claim 11, wherein all the regions constituting one frame are overlaid, then said overlaid picture stored in said frame memory are outputted, and finally, said frame memory is set at 0 (zero).

13. A digital picture decoding apparatus which decodes a picture data encoded through the steps of :
(a) dividing a picture data into a plurality of regions having an arbitrary shape,
(b) allotting said plurality of regions a plurality of layers specifying an overlaying order,
(c) encoding each of said regions according to the overlaying order, and
(d) adding a region identifier to a coded data of each of said region, said decoder comprising :
(1) an outer input terminal,
(2) an identifier selector,
(3) control means,
(4) a switch,
(5) decoding means,
(6) overlaying means, and
(7) a frame memory,
wherein,
said outer input terminal receives said picture data,
said identifier selector selects said region identifier,
said control means receives outer input signal and said region identifier, and produces a control signal controlling said switch,
said switch controlled by said control means closes to input said picture data into said decoding means,
said decoding means decodes said picture data according to the overlaying order, thereby forming a reconstructed region,
said overlaying means receives a reproduced picture and an overlaid picture supplied from said flame memory, and overlays both of the pictures to produce a new overlaid picture,
said frame memory stores said new overlaid picture.

14. A digital picture decoding apparatus which decodes a picture data encoded through the steps of :
(a) dividing a picture data into a plurality of regions having an arbitrary shape,
(b) allotting said plurality of regions a plurality of layers specifying an overlaying order,
(c) encoding each of said regions according to the overlaying order, and
(d) adding a region identifier to a coded data of each of said region,
said decoder comprising :
(1) an outer input terminal,
(2) an identifier selector,
(3) skipped region detection means,
(4) decoding means,
(5) overlaying means, and
(6) a frame memory,
wherein
said outer input terminal receives said picture data,
said identifier selector selects said region identifier,
said skipped region detection means detects a skipped region by using said region identifier, and outputs a detection control signal,
said decoding means receives said detection control signal and said picture data, and outputs a previously reconstructed region having the same region identifier that of the skipped region when a skipped region is detected, and decodes to output said picture data thereby forming the reconstructed region when the skipped region is not detected,
said overlaying means receives a reproduced picture and an overlaid picture supplied from said frame memory, and overlays both of the pictures to produce a new overlaid picture,
said frame memory stores said new overlaid picture.

15. The digital picture decoding apparatus as defined in claim 14, wherein said skipped region detection means comprises :
(a) a register, and
(b) a subtracter,
wherein, said subtracter finds a difference between a region identifier inputted from said region selector and a region identifier stored in said register, and determines that a skipped region exists when the difference is greater than a predetermined threshold.

16. A method of decoding a picture data which is encoded through the steps of :
(a) dividing a picture data into a plurality of regions having an arbitrary shape,
(b) allotting said plurality of regions a plurality of layers specifying an overlaying order, and
(c) encoding each of said regions according to the overlaying order, said method of decoding a picture data comprising the steps of :
(1) decoding said picture data according to said overlaying order, thereby forming a reconstructed region,
(2) storing said decoded picture data in the reconstructed region into a frame memory as an overlaid picture,
(3) inputting a reproduced picture and an overlaid picture supplied from the frame memory, and overlaid the reproduced picture and the overlaid picture to produce a new overlaid picture, and
(4) storing the new overlaid picture into said frame memory.

17. A storage media storing a program of encoding a digital picture data through the steps of :
(a) dividing a picture data into a plurality of regions having an arbitrary shape,
(b) allotting said plurality of regions a plurality of layers specifying an overlaying order, and
(c) encoding each of said regions according to the overlaying oredr after changing an adjacent part of a shape of an objective region to an upper region of the objective region.

18. A storage media storing a program of decoding and reproducing a picture data which was encoded through the steps of :
(a) dividing a picture data into a plurality of regions having an arbitrary shape,
(b) allotting said plurality of regions a plurality of layers specifying an overlaying order, and
(c) encoding each of said regions according to the overlaying order,
wherein
said picture data encoded is decoded according to the overlaying order whereby a reconstructed region is formed, a reproduced picture and the overlaid picture are inputted, and both of the pictures are overlaid to produce a new overlaid picture.

## Amended claims

### Amended claims under Art. 19.1 PCT

1. A method of encoding a digital picture data comprising the steps of:
(a) dividing a picture data into a plurality of regions having an arbitrary shape,
(b) allotting said plurality of regions a plurality of layers specifying an overlaying order,
(c) encoding each of said regions according to the overlaying order.
2. A method of encoding a digital picture data comprising the steps of:
(a) dividing a picture data into a plurality of regions having an arbitrary shape,
(b) allotting said plurality of regions a plurality of layers specifying an overlaying order,
(c) encoding each of said regions from a region allotted with a lowest overlaying order.
3. A method of encoding a digital picture data comprising the steps of:
(a) dividing a picture data into a plurality of regions having an arbitrary shape,
(b) allotting said plurality of regions a plurality of layers specifying an overlaying order,
(c) encoding each of said regions from a region allotted with a highest overlaying order.
4. The method of encoding a digital picture data as defined in Claim 1, Claim2, or Claim3, wherein a luminance signal, a color difference signal, and a shape signal are compressed and encoded according to the defined overlaying order.
5. The method of encoding a digital picture data as defined in Claim 4, wherein a shape of an objective region is coded after an adjacent part of the shape of said objective region to an upper priority region is modified.
6. The method of encoding a digital picture data as defined in Claim 4, wherein a shape of an objective region is encoded after an adjacent part of the shape of said objective region to an upper priority region is modified so that an amount of encoded data is minimized.
7. The method of encoding a digital picture data as defined in Claim 1, 2, 3, 4, 5, or 6 wherein the overlaying order is allotted to the layers depending on a distance from a center of said picture to a center of gravity of each region.
8. The method of encoding a digital picture data as defined in Claim 7, wherein the overlaying order is allotted to the layers so that a region having a nearest distance between the center of gravity thereof and the center of said picture.
9. A digital picture encoding apparatus comprising;
(a) an input terminal,
(b) region division means,
(c) region overlaying order determination means, and
(d) encoding means,
wherein,
said input terminal receives a picture,
said region division means divides the picture into a plurality of regions having an arbitrary shape, and outputs a division map,
said region overlaying order determination means receives said division map, and allots said plurality of regions a plurality of layers specifying an overlaying order,
said encoding means encodes a luminance signal, a color difference signal, and a shape signal of said regions according to said overlaying order.
10. A digital picture encoding apparatus comprising;
(a) an input terminal,
(b) region division means,
(c) region overlaying order determination means,
(d) a region selector, and
(e) encoding means,
wherein,
said input terminal receives a picture,
said region division means divides the picture into a plurality of regions having an arbitrary shape, and outputs a division map,
said region overlaying order determination means receives said division map, and allots a plurality of layers to said plurality of regions specifying an overlaying order,
said region selector receives said picture and said division map, and outputs a luminance signal, color difference signal and a shape signal of a corresponding region according to the overlaying order,
said encoding means receives and encodes the luminance signal, color difference signal, and shape signal outputted from said region selector.
11. The digital picture encoding apparatus as defined in Claim 9 or Claim 10, wherein a shape of an objective region is encoded after an adjacent part of the shape of said objective region to an upper priority region is modified so that an amount of encoded data is minimized.
12. In the method of encoding a digital picture comprising the steps of:
(a) dividing a picture data into a plurality of regions having an arbitrary shape,
(b) allotting said plurality of regions a plurality of layers specifying an overlaying order, and
(c) encoding each of said regions according to the overlaying order,
wherein, a region identifier is added to a coded data of each of said regions.
13. The method of encoding a digital picture as defined in Claim 12, wherein said region identifier is denoted with a serial number according to the overlaying order.
14. A digital picture decoding apparatus which decodes a picture data encoded through the steps of;
(a) dividing a picture data into a plurality of regions having an arbitrary shape,
(b) allotting said plurality of regions a plurality of layers specifying an overlaying order,
(c) encoding each of said regions according to the overlaying order,
said decoder comprising;
(1) an outer input terminal,
(2) decoding means,
(3) overlaying means, and
(4) a frame memory, wherein;
said outer input terminal receives said picture data,
said decoding means decodes said picture data according to the overlaying order, thereby forming a reconstructed region,
said overlaying means receives a reproduced picture and an overlaid picture supplied from said frame memory, and overlays both of the pictures to produce a new overlaid picture,
said frame memory stores said new overlaid picture.
15. The digital picture decoding apparatus as defined in Claim 14, wherein; all the regions constituting one frame are overlaid, then said overlaid picture stored in said frame memory are outputted, and finally, said frame memory is set at 0 (zero.)
16. A digital picture decoding apparatus which decodes a picture data encoded through the steps of;
(a) dividing a picture data into a plurality of regions having an arbitrary shape,
(b) allotting said plurality of regions a plurality of layers specifying with an overlaying order,
(c) encoding each of said regions according to the overlaying order, and
(d) adding a region identifier to a coded data of each of said region,
said decoder comprising;
(1) an outer input terminal,
(2) an identifier selector,
(3) control means,
(4) a switch,
(5) decoding means,
(6) overlaying means, and
(7) a frame memory,
wherein;
said outer input terminal receives said picture data,
said identifier selector selects said region identifier,
said control means receives outer input signal and said region identify, and produces a control signal controlling said switch,
said switch controlled by said control means closes for inputting said picture data into said decoding means,
said decoding means decodes said picture data according to the overlaying order, thereby forming a reconstructed region according to the overlaying order,
said overlaying means receives a reproduced picture and an overlaid picture supplied from said frame memory, and overlays both of the pictures to produce a new overlaid picture,
said frame memory stores said new overlaid picture.
17. A digital picture decoding apparatus which decodes a picture data encoded through the steps of;
(a) dividing a picture data into a plurality of regions having an arbitrary shape,
(b) allotting said plurality of regions a plurality of layers specifying an overlaying order,
(c) encoding each of said regions according to the overlaying order, and
(d) adding a region identifier to a coded data of each of said region,
said decoder comprising;
(1) an outer input terminal,
(2) an identifier selector,
(3) skipped region detection means,
(4) decoding means,
(5) overlaying means, and
(6) a frame memory,
wherein;
said outer input terminal receives said picture data,
said identifier selector selects said region identifier,
said skipped region detection means detects a skipped region by using said region identifier, and outputs a detection control signal,
said decoding means receives said detection control signal and said picture data, and outputs a previously reconstructed region having the same region identifier that of the skipped region when a skipped region is detected, and decodes to output said picture data thereby forming the reconstructed region when the skipped region is not detected,
said overlaying means receives a reproduced picture and an overlaid picture supplied from said frame memory, and overlays both of the pictures to produce a new overlaid picture,
said frame memory stores said new overlaid picture.
18. The digital picture decoding apparatus as defined in Claim 17
wherein;
said skipped region detection means comprises:
(a) a register, and
(b) a subtracter,
wherein, said subtracter finds a difference between a region identifier inputted from said region selector and a region identifier stored in said register, and determines that a skipped region exists when the difference is greater than a predetermined threshold.
19. A method of decoding a picture data which is encoded through
the steps of;
(a) dividing a picture data into a plurality of regions having an arbitrary shape,
(b) allotting said plurality of regions a plurality of layers specifying an overlaying order, and
(c) encoding each of said regions according to the overlaying order,
said method of decoding a picture data comprising the steps of;
(1) decoding said picture data according to said overlaying order, thereby forming a reconstructed region according to said overlaying order,
(2) storing said decoded picture data in the reconstructed region into a frame memory as an overlaid picture,
(3) inputting a reproduced picture and an overlaid picture supplied from the frame memory, and overlaid the reproduced picture and the overlaid picture to produce a new overlaid picture, and
(4) storing the new overlaid picture into said frame memory.
20. A storage media storing a digital picture data which was encoded through the steps of;
(a) dividing a picture data into a plurality of regions having an arbitrary shape,
(b) allotting said plurality of regions a plurality of layers specifying an overlaying order, and
(c) encoding each of said regions according to the overlaying order.
